(19) Europäisches Patentamt
European Patent Office
Office européen des brevets

(11) **EP 3 765 216 B1**

(12) **EUROPÄISCHE PATENTSCHRIFT**

(45) Veröffentlichungstag und Bekanntmachung des Hinweises auf die Patenterteilung:
**08.04.2026  Patentblatt 2026/15**

(21) Anmeldenummer: **19704295.5**

(22) Anmeldetag: **07.02.2019**

(51) Internationale Patentklassifikation (IPC):
***B21B 45/02*** *(2006.01)*

(52) Gemeinsame Patentklassifikation (CPC):
**B21B 45/0218;** B21B 45/0233

(86) Internationale Anmeldenummer:
**PCT/EP2019/053000**

(87) Internationale Veröffentlichungsnummer:
**WO 2019/174826 (19.09.2019 Gazette 2019/38)**

(54) **KÜHLGRUPPE FÜR EINE LAMINARKÜHLVORRICHTUNG**

COOLING UNIT FOR A LAMINAR COOLING DEVICE

GROUPE DE REFROIDISSEMENT POUR UN DISPOSITIF DE REFROIDISSEMENT LAMINAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2018  DE 102018203640**
**12.11.2018  DE 102018219276**

(43) Veröffentlichungstag der Anmeldung:
**20.01.2021  Patentblatt 2021/03**

(73) Patentinhaber: **SMS group GmbH**
**41069 Mönchengladbach (DE)**

(72) Erfinder:
• **ALKEN, Johannes**
**57076 Siegen (DE)**
• **BERG, Henning**
**57223 Kreuztal (DE)**
• **KIESSLING-ROMANUS, Jens**
**57072 Siegen (DE)**

(74) Vertreter: **Kross, Ulrich**
**Hemmerich & Kollegen**
**Patentanwälte**
**Hammerstraße 2**
**57072 Siegen (DE)**

(56) Entgegenhaltungen:
WO-A1-2014/167138      DE-A1- 102010 049 020
JP-A- H02 290 923       JP-A- S5 457 414

**Beschreibung**

Die Erfindung betrifft eine Kühlgruppe für eine Laminarkühlvorrichtung, von der mindestens eine oberhalb und unterhalb eines zu kühlenden Bandes anordenbar ist, um das Band mit einer Kühlflüssigkeit zu beaufschlagen, umfassend einen zentralen Zulauf, über den Kühlflüssigkeit zugeführt wird, ein vom zentralen Zulauf mit Kühlflüssigkeit versorgtes Verteilerrohr und eine Anzahl Beaufschlagungseinheiten, die vom Verteilerrohr mit Kühlflüssigkeit versorgt werden, wobei an jeder Beaufschlagungseinheit eine Anzahl Kühldüsen angeordnet ist, über die Kühlflüssigkeit auf das Band ausgebracht wird.

Typischerweise ist eine Laminarkühlvorrichtung (Laminarkühlstrecke) zum Kühlen von gewalztem Metallband in einzelne Kühlgruppen unterteilt. Jede Kühlgruppe besteht aus einem zentralen Zulauf und einem Verteilerrohr, welches in mindestens vier oder mehr Beaufschlagungseinheiten (Kühlbalken) mündet, die oberhalb oder unterhalb des zu kühlenden Metallbandes angeordnet sind. Die Gruppen, die unmittelbar hinter dem Walzprozesses angeordnet sind, werden vorzugsweise mit einer höheren Durchflussmenge belegt als die am Kühlende befindlichen bzw. diejenigen, welche kurz vor dem Haspel angeordnet sind.

Eine solche Kühlvorrichtung ist in der JP S54 57414 A beschrieben. Ähnliche und andere Lösungen zeigen die WO 2014/167138 A1, die JP H02 290923 A, die CN 103861879, die CN 102397888, die CN 102513385 und die CN 203419952 U.

Das Einstellen einer definierten Abkühlkurve setzt eine bestimmte Kühlstrategie voraus, gemäß der einzelne Beaufschlagungseinheiten einer Kühlgruppe die Wassermengen so freisetzen, dass die vorgegebene Abkühlkurve erreicht und bei sich ändernden Prozessparametern (zum Beispiel Änderung der Walzgeschwindigkeit oder Endwalztemperatur) die angestrebte Solltemperatur während des Aufhaspelns (Haspeltemperatur) eingehalten wird.

Voraussetzung dafür ist, dass aus den einzelnen Beaufschlagungseinheiten immer die genau vorgesehene, im besten Fall gleiche Wassermenge austritt, unabhängig davon, welcher Schaltzustand in der Kühlgruppe auftritt.

Hierzu ist nach einer ersten vorbekannten Lösung vorgesehen, dass der Zulauf zu einer Kühlgruppe durch einen mit dem Kühlwasser gefüllten Hochbehälter erfolgt, durch den ein fester Vordruck an der Zuführung der Kühlgruppe gegeben ist. Unmittelbar vor den einzelnen Beaufschlagungseinheiten befinden sich die Schaltarmaturen, die entweder vollständig geöffnet oder vollständig geschlossen sind, je nachdem, ob aus der jeweiligen Einheit Kühlwasser auf das Metallband aufgebracht werden soll oder nicht.

Nachteilig ist bei dieser Konstellation, dass der eigentlich konstante Vordruck je nach Strömungsgeschwindigkeit in den Leitungssystemen zu einem Druckverlust führt, der die strömende Wassermenge in den Beaufschlagungseinheiten je nach Schaltzustand verringert. Damit geht nachteilig einher, dass die individuelle Durchflussmenge durch eine Beaufschlagungseinheit abhängig von dem Schaltzustand der gesamten Gruppe ist. Eine Kühlstrategie zum Bandkühlen kann damit nur ungenau arbeiten.

Aus der DE 10 2010 049020 A1 ist eine Kühlgruppe für eine Laminarkühlvorrichtung bekannt. Die in dieser Druckschrift offenbarten beiden Kühlrohre des Kühlbalkens können als Beaufschlagungseinheiten und der Kühlbalken selbst als Kühlgruppe im Sinne der vorliegenden Erfindung angesehen werden. Die beiden Kühlrohre werden von einem Verteilerrohr mit Kühlflüssigkeit versorgt, das wiederum von einem zentralen Zulauf mit Kühlflüssigkeit versorgt wird. An beiden Kühlrohren ist eine Anzahl von Kühldüsen angeordnet, über welche die Kühlflüssigkeit auf ein zu kühlendes Band aufgebracht wird. Dem Verteilerrohr ist ein geregeltes Ventil zugeordnet zur Einstellung eines Soll-Volumenstromes der Kühlflüssigkeit. Eine Abweichung von diesem Sollwert wird über einen Drucksensor detektiert und einer Regelstrecke übermittelt. Ein Druckabfall im Zufluss entspricht einer kumulierten Erhöhung des Kühlmittelstrom-Bedarfes der beiden Beaufschlagungseinheiten, der eine entsprechende Anpassung des gesamten Soll-Durchflusses am Ventil durch die Regelstrecke nach sich zieht.

Der Erfindung liegt daher die **Aufgabe** zugrunde, bekannte Kühlgruppen für eine Laminarkühlvorrichtung so zu gestalten, dass eine Verbesserung hinsichtlich der Regelgenauigkeit und der Regelgeschwindigkeit der Kühlflüssigkeitsbeaufschlagung erreicht werden kann.

Diese Aufgabe wird durch die Erfindung gelöst, wie in Patentanspruch 1 angegeben.

Demnach ist bei der erfindungsgemässen Kühlgruppe insbesondere eine Durchflussmessung (7) zur direkten Messung des Durchflusses durch den zentralen Zulauf (2) vorgesehen, wobei in der Regelstrecke der gemessene Ist-Wert mit dem Soll-Wert des Volumenstroms verglichen wird.

Mit der erfindungsgemäßen Lösung wird auf einfache, jedoch effektive Weise sichergestellt, dass den Beaufschlagungseinheiten genau diejenige Flüssigkeitsmenge zur Verfügung steht, die zum Einstellen der Kühlrate erforderlich ist. Ein Druckverlust auf der kurzen Leitungsstrecke ist vernachlässigbar bei Berücksichtigung der unten stehenden Auslegungsmerkmale, so dass die Beaufschlagungseinheiten einer Kühlgruppe gleichmäßig versorgt werden können.

Die Laminarkühlvorrichtung ist vorzugsweise ausgebildet, durch eine oberhalb oder unterhalb des zu kühlenden Bandes angeordnete Vorrichtung einen Volumenstrom zwischen 30 und 200 $m^3/m^2$ h pro Bandseite zu leiten.

Der Querschnitt des Verteilerrohrs und der Querschnitt der Beaufschlagungseinheiten stehen vorzugsweise in einem Verhältnis von mindestens 1,0; besonders bevorzugt ist für das Verhältnis ein Wert von mindestens 1,5 vorgesehen.

Im Falle der Anordnung der Laminarkühlvorrichtung oberhalb des zu kühlenden Bandes ist diese bevorzugt so ausgebildet, dass das Verhältnis der Strömungsgeschwindigkeit im Verteilerrohr zur Strömungsgeschwindigkeit in der Beaufschlagungseinheit im Bereich zwischen 0,6 und 3,0 beträgt.

Im Falle der Anordnung der Laminarkühlvorrichtung unterhalb des zu kühlenden Bandes beträgt das Verhältnis der Strömungsgeschwindigkeit im Verteilerrohr zur Strömungsgeschwindigkeit in der Beaufschlagungseinheit bevorzugt im Bereich zwischen 0,2 und 1,0.

Die Reynolds-Zahl im zentralen Zulauf, im Verteilerrohr und/oder und in den Beaufschlagungseinheiten liegt bevorzugt zwischen 2.000 und 3.000. Die Reynoldszahl ist dabei das Produkt aus der Dichte des Kühlmediums mit der Strömungsgeschwindigkeit und der charakteristischen Länge (Bezugslänge) des durchströmten Körpers geteilt durch die dynamische Viskosität des Kühlmediums.

Die Laminarkühlvorrichtung ist bevorzugt so ausgebildet, dass der Druck in einer oberhalb des Bandes angeordneten Beaufschlagungseinheit oberhalb von 0,05 bar gehalten wird.

Sie ist bevorzugt so ausgebildet, dass der Druck in einer unterhalb des Bandes angeordneten Beaufschlagungseinheit oberhalb von 0,025 bar gehalten wird.

Bevorzugt wird der Soll-Volumenstrom ($\dot{Q}_{Soll}$) mit der Regelstrecke unter Berücksichtigung eines Korrekturwertes (Korr.) zur Durchflussmengeneinstellung geregelt.

Die Kühlwassermenge einer jeden Beaufschlagungseinheit wird gemäß der Vorgabe einer an sich bekannten Kühlstrategie berechnet. Der gesamte Kühlmittelbedarf ergibt sich gemäß obiger Formel aus der Summe der Kühlwassermengen der einzelnen Beaufschlagungseinheiten (1 bis n). Die Kühlwassermenge der einzelnen Beaufschlagungseinheiten kann in den einzelnen Einheiten gleich oder unterschiedlich sein.

Bevorzugt sind mindestens sechs, besonders bevorzugt mindestens acht Beaufschlagungseinheiten in Förderrichtung des Bandes aufeinander folgend in einer Kühlgruppe angeordnet.

Das vorgeschlagene Konzept stellt demgemäß darauf ab, vor jede Kühlgruppe ein Volumenstromregelventil zu setzen, welches die gewünschte Durchflussmenge in der Gruppe unabhängig vom Vordruck regelt. Weiterhin sind die Durchmesserverhältnisse (Querschnittsverhältnisse) der Zuleitungen zu den Kühlbalken in spezieller Weise gewählt. Hiermit wird gewährleistet, dass das Zu- oder Abschalten von Beaufschlagungseinheiten (gleichgültig in welcher Konstellation) der Gruppe keinerlei Einfluss auf die lokale Durchflussmenge einer einzelnen Beaufschlagungseinheit hat.

Bevorzugt ist also eine gruppenweise geregelte Kühlstrecke vorgesehen, bei der eine spezifische Beaufschlagungsmenge zwischen 30 und 200 m³/m² h pro Bandseite vorgesehen ist. Das Querschnittsverhältnis zwischen Verteilerrohr/ Kühlbalken beträgt dabei mindestens 1,0, vorzugsweise mindestens 1,5. Das Geschwindigkeitsverhältnis zwischen Verteilerrohr/Beaufschlagungseinheit der oberen Kühlgruppe liegt bevorzugt zwischen 0,6 und 3,0; dasjenige der unteren Kühlgruppe bevorzugt zwischen 0,2 und 1,0.

Der Betriebsdruck der oberen Beaufschlagungseinheit beträgt mindestens 0,050 bar, derjenige der unteren Beaufschlagungseinheit mindestens 0,025 bar.

Mit der vorgeschlagenen Lösung wird eine Kühlanlage zur Kühlung einer Bramme bzw. eines Bandes bereitgestellt, mit der eine verbesserte Kühlwirkung erreicht werden kann.

Der Durchfluss des Kühlmittels wird direkt gemessen und geregelt, so dass ein vorgegebener Wert des Volumenstroms präzise eingehalten werden kann. Hierzu ist mindestens eine Regelstrecke vorgesehen, um einen Durchflussmengenbereich zu regeln. Hierfür sind mindestens ein Durchflussmesser und mindestens ein Regelventil vorgesehen, die an entsprechenden Positionen der Zuleitung angeordnet sind.

Hiermit kann die Menge des Kühlmittels sowie die beaufschlagte Fläche variiert werden.

Die Kühlanlage und deren Kühlleistung werden bevorzugt in ein Prozessmodell eingebunden.

Mit der vorgeschlagenen Vorrichtung bzw. der entsprechenden Verfahrensweise kann eine Verbesserung hinsichtlich der Regelgenauigkeit und der Regelgeschwindigkeit der Kühlbeaufschlagung erreicht werden (beispielsweise hinsichtlich des "Bandspeedup", der Gefügeeinstellung sowie der Inhomogenität des Bandes).

In der Zeichnung ist ein Ausführungsbeispiel der Erfindung dargestellt. Die einzige Figur zeigt in schematischer Darstellung eine Kühlgruppe einer Laminarkühlvorrichtung, die die Oberseite eines nicht dargestellten Bandes kühlt.

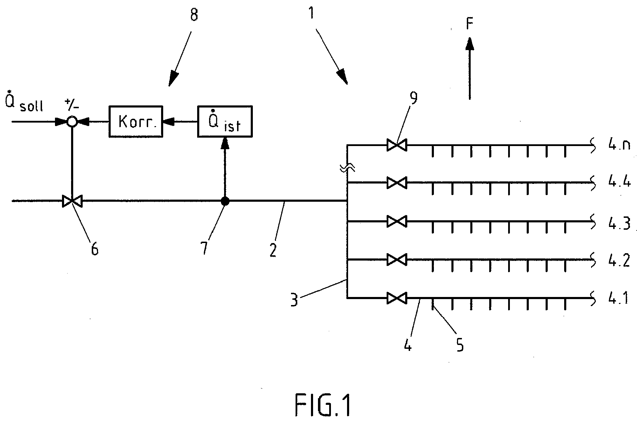

Die Kühlgruppe einer Laminarkühlvorrichtung 1 umfasst im Ausführungsbeispiel fünf Beaufschlagungseinheiten 4 in Form von Kühlbalken, die in Förderrichtung F des (nicht dargestellten) Bandes aufeinanderfolgend angeordnet sind. Vorzugsweise werden 6 bis 8 Beaufschlagungseinheiten 4 zu einer Kühlgruppe zusammengeschlossen. Aus Gründen der vereinfachten Darstellung ist in Figur 1 hierauf verzichtet worden. Die Kühlbalken 4 sind mit einer Vielzahl von Kühldüsen 5 versehen, die Kühlmittel von oben auf das (nicht dargestellte) Band aufbringen.

Die Versorgung mit Kühlmittel erfolgt durch einen zentralen Zulauf 2 von dem aus ein Verteilerrohr 3 mit Kühlmittel gespeist wird. Vom Verteilerrohr 3 gelangt das Kühlmittel zu den Kühlbalken 4.

Wesentlich ist, dass im oder vor dem zentralen Zulauf 2 ein Volumenstrom-Regelventil 6 angeordnet ist, mit dem ein definiertes Volumen an Kühlflüssigkeit pro Zeit durch den zentralen Zulauf 2 geleitet wird.

Der Durchfluss durch den zentralen Zulauf wird mittels der Durchflussmessung 7 direkt gemessen und anhand des Messergebnisses geregelt. Für jeden Durchflussmengenbereich ist jeweils (mindestens) eine Regelstrecke 8 vorgesehen, in der der gemessene Ist-Wert mit dem Soll-Wert verglichen wird und gegebenenfalls mit einem Korrekturwert (Korr.) zur Durchflussmengeneinstellung das Regelventil 6 in seiner Einstellung verändert wird. Je nach der Durchflussmenge sind mindestens ein Durchflussmesser und/oder ein Regelventil an separaten Leitungen eingesetzt.

Durch Ventile 9 können einzelne Beaufschlagungseinheiten 4.n in ihrer Durchflussmenge eingestellt, aber auch zu- oder abgeschaltet werden. Dadurch kann nicht nur die Kühlrate, sondern auch die Beaufschlagungsfläche variiert werden. Alternativ kann das Ventil 9 auch als reines Schaltventil (An/Aus) zur ausschließlichen Einstellung der Schaltfläche ausgebildet sein. Durch die Einbindung in eine Regelung können Veränderungen in der Sollwertvorgabe des Kühlmittelbedarfs hinsichtlich der Kühlrate und/oder der Kühlfläche einzelner Beaufschlagungseinheiten ohne negative Auswirkungen ausgeglichen werden.

Die Kühlmittelmenge und die Beaufschlagungsfläche können dabei variiert werden. Die Regeleinrichtung regelt gegen den Gegendruck (mindestens 40 % des Gesamtdruckverlustes) eine Blende und ermöglicht so eine stufenlose, volumengesteuerte Wassermengenversorgung insbesondere zwischen 40 % und 100 % der Gesamtwassermenge.

Durch die Durchflussmessung kann der gewünschte Schaltzustand überprüft bzw. in der Automatisierung überwacht werden.

Zusätzlich kann eine Funktionalität für die Überprüfung der Funktionseinheit der Kühleinrichtung bzw. der Beaufschlagungseinheiten vorgesehen werden. Hierzu kann im Betrieb eine aktive Reaktion im Rahmen eines Prozessmodells ermöglicht werden. Im Wartungszyklus können Fehlfunktionen festgestellt werden.

Die komplette Wasserwirtschaft kann hierbei eingebunden sein und über die berechneten und eingestellten Wassermengen die Pumpensteuerung vorgenommen werden. So wird nur die zur Kühlaufgabe notwendige Massemenge durch die Pumpen freigegeben.

Bezugszeichenliste

| 1 | Kühlgruppe der Laminarkühlvorrichtung |
| 2 | zentraler Zulauf |
| 3 | Verteilerrohr |
| 4 | Beaufschlagungseinheit (Kühlbalken) |
| 4.1 | Beaufschlagungseinheit (Kühlbalken) |
| 4.2 | Beaufschlagungseinheit (Kühlbalken) |
| 4.3 | Beaufschlagungseinheit (Kühlbalken) |
| 4.4 | Beaufschlagungseinheit (Kühlbalken) |

| 4.n | Beaufschlagungseinheit (Kühlbalken) |
| 5 | Kühldüse |
| 6 | Volumenstrom-Regelventil |
| 7 | Durchflussmessung |
| 8 | Regelstrecke |
| 9 | Ventil |
| F | Förderrichtung |

## Patentansprüche

1. Kühlgruppe für eine Laminarkühlvorrichtung (1), von der mindestens eine oberhalb und unterhalb eines zu kühlenden Bandes anordenbar ist, um das Band mit einer Kühlflüssigkeit zu beaufschlagen, umfassend einen zentralen Zulauf (2), über den Kühlflüssigkeit zugeführt wird, ein vom zentralen Zulauf (2) mit Kühlflüssigkeit versorgtes Verteilerrohr (3) und eine Anzahl Beaufschlagungseinheiten (4), die vom Verteilerrohr (3) mit Kühlflüssigkeit versorgt werden, wobei an jeder Beaufschlagungseinheit (4) eine Anzahl Kühldüsen (5) angeordnet ist, über die Kühlflüssigkeit auf das Band ausgebracht wird, wobei im oder vor dem zentralen Zulauf (2) ein Volumenstrom-Regelventil (6) angeordnet ist, mit dem ein definiertes Volumen an Kühlflüssigkeit pro Zeit durch den zentralen Zulauf (2) geleitet wird, wobei die Einstellung des Volumenstrom-Regelventil (6) aus der Beziehung

$$\dot{Q}_{Soll} = \sum_{i=1}^{n} \dot{Q}_{Soll}{}^{(4.n)}$$

ermittelt wird, wobei

$\dot{Q}_{Soll}$ der gesamte Soll-Volumenstrom und $\dot{Q}_{Soll}$ (4.n) die Soll-Teilvolumenströme in den einzelnen Beaufschlagungseinheiten (4.1, 4.2, ...) ist, und wobei der Soll-Volumenstrom ($\dot{Q}_{Soll}$) mit einer Regelstrecke (8) geregelt wird, mit der das Volumenstrom-Regelventil (6) in seiner Einstellung verändert wird, wobei eine Durchflussmessung (7) zur direkten Messung des Durchflusses durch den zentralen Zulauf (2) vorgesehen ist, wobei in der Regelstrecke der gemessene Ist-Wert mit dem Soll-Wert des Volumenstroms verglichen wird.

2. Kühlgruppe für eine Laminarkühlvorrichtung nach Anspruch 1, **dadurch gekennzeichnet, dass** diese ausgebildet ist, durch eine oberhalb oder unterhalb des zu kühlenden Bandes anordenbare Vorrichtung einen Volumenstrom zwischen 30 und 200 $m^3/m^2$ h pro Bandseite zu leiten.

3. Kühlgruppe für eine Laminarkühlvorrichtung nach Anspruch 1 oder 2, **dadurch gekennzeichnet, dass** der Querschnitt des Verteilerrohrs (3) und der Querschnitt der Beaufschlagungseinheiten (4) in einem Verhältnis von mindestens 1,0 stehen.

4. Kühlgruppe für eine Laminarkühlvorrichtung nach Anspruch 3, **dadurch gekennzeichnet, dass** der Querschnitt des Verteilerrohrs (3) und der Querschnitt der Beaufschlagungseinheiten (4) in einem Verhältnis von mindestens 1,5 stehen.

5. Kühlgruppe für eine Laminarkühlvorrichtung nach einem der Ansprüche 1 bis 4, **dadurch gekennzeichnet, dass** im Falle der Anordnung der Laminarkühlvorrichtung (1) oberhalb des zu kühlenden Bandes diese so ausgebildet ist, dass das Verhältnis der Strömungsgeschwindigkeit im Verteilerrohr (3) zur Strömungsgeschwindigkeit in der Beaufschlagungseinheit (4) im Bereich zwischen 0,6 und 3,0 beträgt.

6. Kühlgruppe für eine Laminarkühlvorrichtung nach einem der Ansprüche 1 bis 5, **dadurch gekennzeichnet, dass** im Falle der Anordnung der Laminarkühlvorrichtung (1) unterhalb des zu kühlenden Bandes diese so ausgebildet ist, dass das Verhältnis der Strömungsgeschwindigkeit im Verteilerrohr (3) zur Strömungsgeschwindigkeit in der Beaufschlagungseinheit (4) im Bereich zwischen 0,2 und 1,0 beträgt.

7. Kühlgruppe für eine Laminarkühlvorrichtung nach einem der Ansprüche 1 bis 6, **dadurch gekennzeichnet, dass** die Reynolds-Zahl im zentralen Zulauf (2), im Verteilerrohr (3) und/oder und in den Beaufschlagungseinheiten (4) zwischen 2.000 und 3.000 liegt.

8. Kühlgruppe für eine Laminarkühlvorrichtung nach einem der Ansprüche 1 bis 7, **dadurch gekennzeichnet, dass** sie ausgebildet ist, um den Druck in einer oberhalb des Bandes angeordneten Beaufschlagungseinheit (4) oberhalb von 0,05 bar zu halten.

9. Kühlgruppe für eine Laminarkühlvorrichtung nach einem der Ansprüche 1 bis 8, **dadurch gekennzeichnet, dass** sie ausgebildet ist, um den Druck in einer unterhalb des Bandes angeordneten Beaufschlagungseinheit (4) oberhalb von 0,025 bar zu halten.

10. Kühlgruppe für eine Laminarkühlvorrichtung nach einem der Ansprüche 1 bis 9, **dadurch gekennzeichnet, dass** der Soll-Volumenstrom ($\dot{Q}_{Soll}$) mit der Regelstrecke (8) unter Berücksichtigung eines Korrekturwertes (Korr.) zur Durchflussmengeneinstellung geregelt wird.

11. Kühlgruppe für eine Laminarkühlvorrichtung nach einem der Ansprüche 1 bis 10, **dadurch gekennzeichnet, dass** mindestens sechs, vorzugsweise mindestens acht Beaufschlagungseinheiten (4) in Förderrichtung (F) des Bandes aufeinander folgend angeordnet sind.

## Claims

1. Cooling group for a laminar cooling device (1), of which at least one can be arranged above and below a strip, which is to be cooled, so as to act on the strip with a cooling liquid, comprising a central feed (2) by way of which cooling liquid is fed, a distributor pipe (3) supplied by the central feed (2) with cooling liquid and a number of charging units (4) which are supplied with cooling liquid by the distributor pipe (3), wherein a number of cooling nozzles (5), by way of which the cooling liquid is delivered to the strip, is arranged at each charging unit (4), wherein a volume flow regulating valve (6) by which a defined volume of cooling liquid per unit of time is conducted through the central feed (2) is arranged in or in front of the central feed (2), wherein the setting of the volume flow regulating valve (6) is determined from the equation

$$\dot{Q}_{Soll} = \sum_{i=1}^{n} \dot{Q}_{Soll\:4\:n},$$

wherein

$\dot{Q}_{Soll}$ is the entire target volume flow and
$\dot{Q}_{Soll}4$ n, is the target part volume flows in the individual charging units (4.1, 4.2, ...),

and
wherein the target volume flow ($\dot{Q}_{Soll}$) is regulated by a regulating path (8) by which the volume flow regulating valve (6) is changed in its setting, wherein a throughflow measuring means (7) is provided for direct measurement of the throughflow through the central feed (2), wherein the measured actual value is compared with the target value of the volume flow in the regulating path.

2. Cooling group for a laminar cooling device according to claim 1, **characterised in that** this is configured to conduct a volume flow between 30 and 200 $m^3/m^2h$ per strip side by a device able to be arranged above or below the strip to be cooled.

3. Cooling group for a laminar cooling device according to claim 1 or 2, **characterised in that** the cross-section of the distributor pipe (3) and the cross-section of the charging units (4) are in a ratio of at least 1.0.

4. Cooling group for a laminar cooling device according to claim 3, **characterised in that** the cross-section of the distributor pipe (3) and the cross-section of the charging units (4) are in a ratio of at least 1.5.

5. Cooling group for a laminar cooling device according to any one of claims 1 to 4, **characterised in that** in the case of arrangement of the laminar cooling device (1) above the strip to be cooled this is so configured that the ratio of the flow speed in the distributor pipe (3) to the flow speed in the charging unit (4) is in the range between 0.6 and 3.0.

6. Cooling group for a laminar cooling device according to any one of claims 1 to 5, **characterised in that** in the case of arrangement of the laminar cooling device (1) below the strip to be cooled this is so configured that the ratio of the flow speed in the distributor pipe (3) to the flow speed in the charging unit (4) is in the range between 0.2 and 1.0.

7. Cooling group for a laminar cooling device according to any one of claims 1 to 6, **characterised in that** the Reynolds number in the central feed (2), in the distributor pipe (3) and/or in the charging units (4) is between 2,000 and 3,000.

8. Cooling group for a laminar cooling device according to any one of claims 1 to 7, **characterised in that** it is configured to keep the pressure in a charging unit (4), which is arranged above the strip, above 0.05 bars.

9. Cooling group for a laminar cooling device according to any one of claims 1 to 8, **characterised in that** it is configured to keep the pressure in a charging unit (4), which is arranged below the strip, to above 0.025 bars.

10. Cooling group for a laminar cooling device according to any one of claims 1 to 9, **characterised in that** the target volume flow ($\dot{Q}_{Soll}$) is regulated by the regulating path (8) with consideration of a correction value (Korr.) for setting throughflow quantity.

11. Cooling group for a laminar cooling device according to any one of claims 1 to 10, **characterised in that** at least six, preferably at least eight, charging units (4) are arranged in succession in conveying direction (F) of the strip.

**Revendications**

1. Groupe de refroidissement pour un dispositif de refroidissement laminaire (1), dont au moins un peut être disposé au-dessus et au-dessous d'une bande à refroidir, pour appliquer un liquide de refroidissement sur la bande, comprenant une entrée centrale (2), par laquelle du liquide de refroidissement est amené, un tuyau de distribution (3) alimenté en liquide de refroidissement par l'entrée centrale (2) et un certain nombre d'unités d'application (4), qui sont alimentées en liquide de refroidissement par le tuyau de distribution (3), dans lequel un certain nombre de buses de refroidissement (5) est disposé sur chaque unité d'application (4), par lesquelles du liquide de refroidissement est distribué sur la bande, dans lequel une vanne de régulation de débit volumique (6) est disposée dans ou avant l'entrée centrale (2), avec laquelle un volume défini de liquide de refroidissement par unité de temps est dirigé à travers l'entrée centrale (2), dans lequel le réglage de la vanne de régulation de débit volumique (6) est déterminé à partir de la relation

$$\dot{Q}_{Soll} = \Sigma_{i=1}^{n} \dot{Q}_{Soll^{(4.n)}}$$

où

$\dot{Q}_{Soll}$ est le débit volumique de consigne total et $\dot{Q}_{Soll}$ (4.n) sont les débits volumiques partiels de consigne dans les unités d'application individuelles (4.1, 4.2, ...), et
dans lequel le débit volumique de consigne ($\dot{Q}_{Soll}$) est régulé avec une boucle de régulation (8), avec laquelle le réglage de la vanne de régulation de débit volumique (6) est modifié, dans lequel une mesure de débit (7) est prévue pour la mesure directe du débit à travers l'entrée centrale (2), dans lequel la valeur réelle mesurée est comparée à la valeur de consigne du débit volumique dans la boucle de régulation.

2. Groupe de refroidissement pour un dispositif de refroidissement laminaire selon la revendication 1, **caractérisé en ce que** celui-ci est conçu pour diriger, par un dispositif pouvant être disposé au-dessus ou au-dessous de la bande à refroidir, un débit volumique compris entre 30 et 200 m$^3$/m$^2$h par côté de bande.

3. Groupe de refroidissement pour un dispositif de refroidissement laminaire selon la revendication 1 ou 2, **caractérisé en ce que** la section transversale du tuyau de distribution (3) et la section transversale des unités d'application (4) sont dans un rapport d'au moins 1,0.

4. Groupe de refroidissement pour un dispositif de refroidissement laminaire selon la revendication 3, **caractérisé en ce que** la section transversale du tuyau de distribution (3) et la section transversale des unités d'application (4) sont dans un rapport d'au moins 1,5.

5. Groupe de refroidissement pour un dispositif de refroidissement laminaire selon l'une des revendications 1 à 4, **caractérisé en ce que**, dans le cas de la disposition du dispositif de refroidissement laminaire (1) au-dessus de la bande à refroidir, celui-ci est conçu de telle sorte que le rapport de la vitesse d'écoulement dans le tuyau de distribution (3) sur la vitesse d'écoulement dans l'unité d'application (4) se situe dans la plage comprise entre 0,6 et 3,0.

6. Groupe de refroidissement pour un dispositif de refroidissement laminaire selon l'une des revendications 1 à 5, **caractérisé en ce que**, dans le cas de la disposition du dispositif de refroidissement laminaire (1) au-dessous de la bande à refroidir, celui-ci est conçu de telle sorte que le rapport de la vitesse d'écoulement dans le tuyau de distribution (3) sur la vitesse d'écoulement dans l'unité d'application (4) se situe dans la plage comprise entre 0,2 et 1,0.

7. Groupe de refroidissement pour un dispositif de refroidissement laminaire selon l'une des revendications 1 à 6, **caractérisé en ce que** le nombre de Reynolds dans l'entrée centrale (2), dans le tuyau de distribution (3) et/ou et dans les unités d'application (4) se situe entre 2.000 et 3.000.

8. Groupe de refroidissement pour un dispositif de refroidissement laminaire selon l'une des revendications 1 à 7, **caractérisé en ce qu'**il est conçu pour maintenir la pression dans une unité d'application (4) disposée au-dessus de la bande au-dessus de 0,05 bar.

9. Groupe de refroidissement pour un dispositif de refroidissement laminaire selon l'une des revendications 1 à 8, **caractérisé en ce qu'**il est conçu pour maintenir la pression dans une unité d'application (4) disposée au-dessous de la bande au-dessus de 0,025 bar.

10. Groupe de refroidissement pour un dispositif de refroidissement laminaire selon l'une des revendications 1 à 9, **caractérisé en ce que** le débit volumique de consigne ($\dot{Q}_{Soll}$) est régulé avec la boucle de régulation (8) en tenant compte d'une valeur de correction (Korr.) pour le réglage de la quantité de débit.

11. Groupe de refroidissement pour un dispositif de refroidissement laminaire selon l'une des revendications 1 à 10, **caractérisé en ce qu'**au moins six, de préférence au moins huit unités d'application (4) sont disposées l'une après l'autre dans la direction de transport (F) de la bande.

FIG.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 54057414 A
- WO 2014167138 A1
- JP H02290923 A
- CN 103861879
- CN 102397888
- CN 102513385
- CN 203419952 U
- DE 102010049020 A1